# EUROPEAN PATENT APPLICATION

(11) **EP 4 764 095 A1**
(43) Date of publication of application: **24.06.2026**
(21) Application number: 25220278.3
(22) Date of filing: 02.12.2025
(51) Int. Cl.: E02F 9/26, G01S 13/931

(54) **TARGET MACHINE LOCATOR SYSTEM**

(30) Priority: 23.12.2024 US 202418999127
(71) Applicant: Caterpillar Inc., Peoria, IL 61629-6450 (US)
(72) Inventor: SPIELMAN, Jr., Michael, Osseo, 49266 (US); CURRIER, Shaun, Naperville, 60564 (US); BLUM, Darren, Plainfield, 60586 (US); EGELJA, Aleksandar, Naperville, 60564 (US); SHANG, Tonglin, Bolingbrook, 60490 (US); BERRY, Jeffrey, Clayton, 27520 (US); GUST, Aleksander, Orland Park, 60462 (US)
(74) Representative: Boult Wade Tennant LLP

(57) **Abstract**

A target machine locator system (200) includes one or more fixed upright structures (202). Each fixed upright structure (202) includes an identification element (204) that is detectable by a perception sensor system (112) of a mobile machine (100) a communication component (206) configured to communicate with the mobile machine (100), and a controller (208). The fixed upright structure (202) also includes at least one of a first set of one or more perception sensors (214) to determine a height (304) parameter associated with a target machine (302) when the target machine (302) is within a proximity zone (218) of the fixed upright structure (202), or a second set of one or more perception sensors (216) to determine an offset distance parameter associated with a side of the target machine (302) when the target machine (302) is within the proximity zone (218).

## Description

### Technical Field

The present disclosure relates generally to a target machine locator system and, for example, to a target machine locator system for determining at least one measurement parameter associated with a target machine.

### Background

To perform a dumping operation, a mobile machine, such as a wheel loader, can use an implement (e.g., a bucket or another implement) to load and to carry a material (e.g., asphalt, debris, dirt, snow, feed, gravel, logs, raw minerals, recycled material, rock, sand, woodchips, or similar material) and to dump the material into a target machine, such as a dump truck. The mobile machine can include perception sensors to detect a position of the target machine, such as to enable an automated implement lift operation. For example, a controller of the mobile machine can use the perception sensors to identify when the mobile machine is sufficiently near the target machine, and thereby automatically cause the implement to raise to a height to enable an efficient dumping of material from the implement into the target machine when the mobile machine reaches the target machine.

However, in many cases, a position of a target machine is difficult to accurately determine. For example, the perception sensors may be configured to identify a fiducial of a dump target (e.g., to facilitate determining the position of the dump target), but the dump target may not include a fiducial, or the fiducial may be at least partially obscured (e.g., due to dirt, a topography of a work site, and/or orientation of the target machine) from a field of view of the perception sensors of the mobile machine. In many cases, this can result in the mobile machine unintentionally contacting the target machine, such as due to a miscalculation of a stopping distance or of an implement position with respect to the target machine. This, in turn, causes damage (e.g., dents, cracks, or other types of structural deformations) to the implement and the linkage, the mobile machine, and the target machine. This can impact a performance of, as well as reduce an operable life of, the implement and the linkage, the mobile machine, and the target machine.

The target machine locator system of the present disclosure solves one or more of the problems set forth above and/or other problems in the art.

### Summary

In some implementations, a target machine locator system includes one or more fixed upright structures, wherein each fixed upright structure includes: an identification element that is detectable by a perception sensor system of a mobile machine; a communication component configured to communicate with the mobile machine; a controller; and a first set of one or more perception sensors to determine a height parameter associated with a target machine when the target machine is within a proximity zone of the fixed upright structure; and a second set of one or more perception sensors to determine an offset distance parameter associated with a side of the target machine when the target machine is within the proximity zone.

In some implementations, a fixed upright structure of a target machine locator system includes an identification element; a controller; and at least one of: a first set of one or more perception sensors to determine a height parameter associated with a target machine when the target machine is within a proximity zone of the fixed upright structure; or a second set of one or more perception sensors to determine an offset distance parameter associated with a side of the target machine when the target machine is within the proximity zone.

In some implementations, a method includes obtaining, by a controller of a fixed upright structure of a target machine locator system, perception information indicating a measurement parameter associated with a target machine; and causing, by the controller, the perception information to be transmitted to a mobile machine, wherein causing the perception information to be transmitted to the mobile machine enables the mobile machine to determine at least one of a distance from the mobile machine to the target machine or a height of the target machine.

### Brief Description of the Drawings

Fig. 1 is a diagram of an example machine described herein.
Fig. 2 is a diagram of a target machine locator system described herein.
Figs. 3A-3B are diagrams of an example implementation described herein.
Figs. 4A-4B are diagrams of an example implementation associated with a controller of a fixed upright structure of a target machine locator system.
Fig. 5 is a diagram of example components of a device associated with a target machine locator system.

### Detailed Description

This disclosure relates to a target machine locator system that is configured to determine at least one measurement parameter associated with a target machine, such as a dump truck or any other machine that may be a destination for a work operation (e.g., a dumping operation). The target machine locator system may communicate with a mobile machine, such as any mobile machine that is capable of traveling to the target machine. For example, the mobile machine may be capable of loading and moving material (e.g., from a first location to a second, different location) and/or dumping the material into the target machine. Each of the mobile machine and the target machine may be any machine that performs an operation associated with an industry such as, for example, mining, construction, farming, transportation, or any other industry. As some examples, the mobile machine or the target machine may be a vehicle, a wheel loader, a backhoe loader, a cold planer, a compactor, a feller buncher, a forest machine, a forwarder, a harvester, an excavator, an industrial loader, a knuckleboom loader, a material handler, a dump truck, a motor grader, a pipelayer, a road reclaimer, a skid steer loader, a tractor, a dozer, a tractor scraper, or other above ground equipment, underground equipment, aerial equipment, or marine equipment.

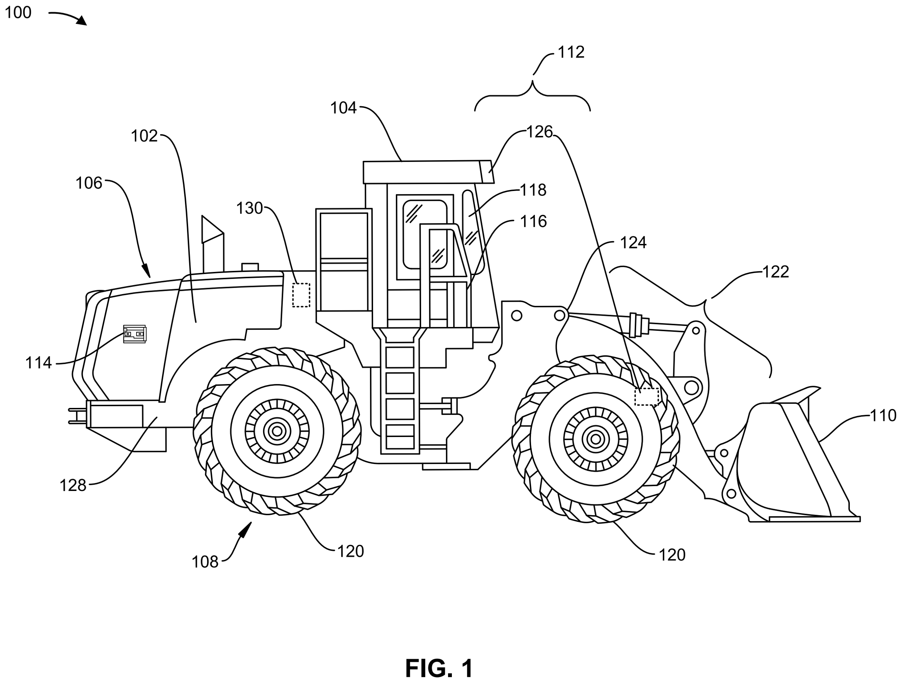

Fig. 1 is a diagram of an example machine 100 described herein. For example, the machine 100 may include a mobile machine, such as the wheel loader shown in Fig. 1, or any other type of mobile machine. Further, the machine 100 may be a manned machine or an unmanned machine, and/or may be fully autonomous, semi-autonomous, or remotely operated.

As shown, the machine 100 may have a frame 102 that supports an operator station 104, a power system 106, a drive system 108, an implement 110, a perception sensor system 112, and a controller 114. The operator station 104 may include operator controls 116 for operating the machine 100 via the power system 106. In some examples, the machine 100 may not include an operator station 104 and/or operator controls 116 (e.g., the machine 100 may be controlled via other means, such as a remote control system). The operator station 104 may be configured to define an interior cabin 118 within which the operator controls 116 are housed.

The power system 106 is configured to supply power to the machine 100. The power system 106 may be operably arranged to receive control signals from the operator controls 116 in the operator station 104 and/or from the controller 114. Additionally, or alternatively, the power system 106 may be operably arranged with the drive system 108 and/or the implement 110 to selectively operate the drive system 108 and/or the implement 110 according to the control signals. The power system 106 may provide operating power for the propulsion of the drive system 108 and/or the operation of the implement 110. The power system 106 may include an engine, a motor, an electric drive, a fuel cell, and/or another type of power system.

The drive system 108 may be operably arranged with the power system 106 to selectively propel the machine 100 via the control signals. The drive system 108 can include a plurality of ground-engaging members, such as wheels 120, as shown, which can be movably connected to the frame 102 through axles, drive shafts, and/or other components. The drive system 108 may be provided in the form of a track-drive system, a wheel-drive system, or any other type of drive system configured to propel the machine 100.

The implement 110 may be operably arranged with the power system 106 such that the implement 110 is selectively movable through control signals transmitted to the power system 106 from the operator controls 116 and/or the controller 114. As shown in Fig. 1, the implement 110 may be coupled to the machine 100 via a linkage 122, such as at a front 124 of the machine 100. The implement 110 may also be referred to as an attachment, a work tool, a work implement, and/or a tool, among other examples. Fig. 1 depicts implement 110 as a bucket as an example. Other embodiments can include any other suitable implement 110 for a variety of tasks, including, for example, dozing, brushing, compacting, grading, lifting, loading, plowing, and/or ripping, among other examples. Example implements 110 include a stump grinder, a trencher, a broom, a brush cutter, a cold planer, a mower, a mulcher, a processor, a pulverizer, a rake, a saw, a snow product, a snow blower, a tiller, a winch, an auger, a blade, a breaker/hammer, a compactor, a cutter, a forked lifting device, a grader bit and end bit, a grapple, a blade, and/or a ripper, among other examples. As described elsewhere herein, the implement 110 may include one or more components or parts that are electrically powered.

The perception sensor system 112 includes one or more perception sensors 126, which may be coupled to the machine 100, such as at the front 124 of the machine 100. The one or more perception sensors 126 may include a sonar sensor, a camera, a light detection and raging (LIDAR) sensor, and/or a radio detection and ranging (RADAR) sensor, or another type of sensor to perceive an environment of the machine 100. That is, one or more perception sensors 126 may include at least one sensor that is configured to capture perception data that can be used (e.g., by the controller 114) to determine at least one of a position (e.g., that indicates a distance and an azimuth angle, along with other examples) of a target (e.g., a dump target), such as relative to the machine 100, or a height of the target.

The controller 114 may include an electronic control module (ECM) or other computing device. The controller 114 may be configured to cause perception data captured by sets of one or more sensors of the perception sensor system 112 to be used in association with an automatic control operation associated with at least one of the machine 100 or the implement 110 and the linkage 122, and/or cause one or more other actions to be performed, as further described herein.

A rear portion 128 of the machine 100 may include an engine and a transmission. The engine may be any type of engine suitable for performing work using the machine 100, such as an internal combustion engine, a diesel engine, a gasoline engine, a gaseous fuel-powered engine, and/or the like. In other examples, rather than an engine, the machine 100 may include another power system, such as a motor (e.g., an electric motor), a battery powered system, a fuel cell, or another type of power system. The transmission may transfer power from the engine to the drive system 108 and/or the implement 110.

The machine 100 may also include a communication component 130, which may be housed within or mounted to the machine 100. The communication component 130 may be configured to communicate (e.g., wirelessly communicate) with a target machine locator system (e.g., the target machine locator system 200 describe herein). Accordingly, the communication component 130 may include a radio frequency (RF) component, a Bluetooth component, a Zigbee component, a WiFi component, or a cellular component, along with other examples.

As indicated above, Fig. 1 is provided as an example. Other examples may differ from what is described in connection with Fig. 1.

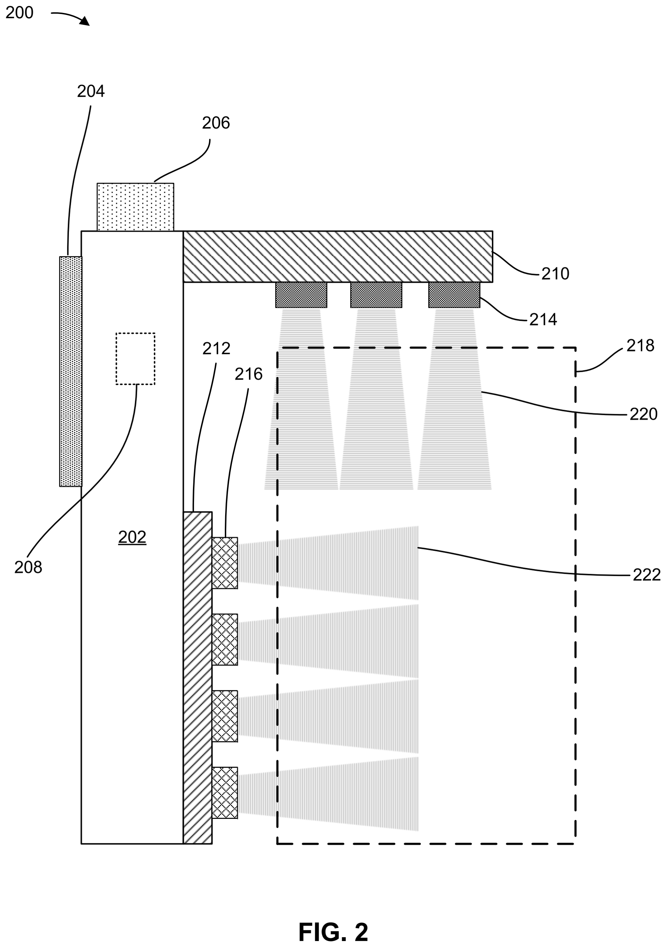

Fig. 2 is a diagram of a target machine locator system 200 described herein. The target machine locator system 200 may include one or more fixed upright structures 202. As shown, each fixed upright structure 202 may include, for example, an identification element 204, a communication component 206, a controller 208, a first structural element 210, a second structural element 212, a first set of one or more perception sensors 214, and/or a second set of one or more perception sensors 216. The fixed upright structure 202 may include a proximity zone 218, where the first set of perception sensors 214 and/or the second set of perception sensors 216 can determine measurement parameters (e.g., of a target machine, when the target machine is within the proximity zone 218) with improved accuracy, as further described herein.

Each fixed upright structure 202 may be a structure that is configured to be disposed on the ground, or mounted on a foundation below ground level, such as at a worksite. Accordingly, the fixed upright structure 202 may have a bottom end (e.g., that contacts the ground) and a top end. A longitudinal axis of the fixed upright structure 202 runs from the bottom end to the top end. The fixed upright structure 202 may be installed to be perpendicular (or nearly perpendicular) to the ground and/or to be vertically (or nearly vertically) upright. That is, the longitudinal axis may be a vertical axis (or a nearly vertical axis). A height of the fixed upright structure 202 (from the ground to the top end of the fixed upright structure 202, when installed) may be greater than a height of a target machine that is to be measured by the first set of one or more perception sensors 214 and/or the second set of one or more perception sensors 216, as further described herein. The fixed upright structure 202 may include a post, a column, a pole, a pillar, or another type of fixed upright structure.

The identification element 204 may be detectable by a perception sensor system of a mobile machine, such as the perception sensor system 112 of the machine 100. For example, the identification element 204 may include a fiducial (e.g., an AprilTag, a quick response (QR) code, a barcode, and/or any other type of optically identifiable marker that includes a visual pattern and/or alphanumeric string), a RADAR reflector, a sonar beacon, a retroreflective marker, or another type of identification element that is detectable by the one or more perception sensors 126 of the perception sensor system 112. The identification element 204 may be connected to the fixed upright structure 202 and may be positioned nearer to the top end of the fixed upright structure 202 than to the bottom end of the fixed upright structure 202, such as to facilitate the identification element 204 being perceived by a perception sensor system of a mobile machine. The identification element 204 may be mounted on a side of the fixed upright structure 202, such as a side that is opposite a side of the fixed upright structure 202 that faces the proximity zone 218. The identification element 204 may identify (e.g., to a perception sensor system of a mobile machine) at least one of the fixed upright structure 202 or the target machine locator system 200. That is, the identification element 204 may uniquely identify the fixed upright structure 202 (e.g., as distinct from another fixed upright structure 202 of the target machine locator system 200), may generally identify the fixed upright structure 202 (e.g., as a general fixed upright structure 202 that is part of the target machine locator system 200), or may identify only the target machine locator system 200.

The communication component 206 may be configured to communicate (e.g., wirelessly communicate) with a mobile machine, such as the machine 100. Accordingly, the communication component 206 may include an RF component, a Bluetooth component, a Zigbee component, a WiFi component, or a cellular component, along with other examples. The communication component 206 may be configured to transmit perception information captured by the first set of one or more perception sensors 214 and/or the second set of one or more perception sensors 216 to the mobile machine (e.g., to a communication component of the mobile machine, such as the communication component 130 of the machine 100), as further described herein. The communication component 206 may be connected to the fixed upright structure 202 and may be positioned nearer to the top end of the fixed upright structure 202 than to the bottom end of the fixed upright structure 202, such as to facilitate transmission (e.g., wireless transmission) of perception information to a mobile machine.

The controller 208 may include an ECM or other computing device. The controller 208 may be configured to control the communication component 206, the first set of one or more perception sensors 214, and/or the second set of one or more perception sensors 216. For example, the controller 208 may cause the first set of one or more perception sensors 214 and/or the second set of one or more perception sensors 216 to capture perception information and to provide the perception information to the controller 208 (e.g., to allow the controller 114 to obtain the perception information), and may cause the communication component 206 to transmit the perception information to a mobile machine. The communication component 206 may be connected to the fixed upright structure 202 and may be housed with an interior of the fixed upright structure 202 or may be otherwise shielded from an external environment.

The first structural element 210 may be connected to the fixed upright structure 202 and may be positioned nearer to the top end of the fixed upright structure 202 than to the bottom end of the fixed upright structure 202. The first structural element 210 may be positioned at a height that is greater than a height of a target machine that is to be measured by the first set of one or more perception sensors 214 and/or the second set of one or more perception sensors 216, such as when the target machine is within the proximity zone 218, as further described herein. Additionally, the first structural element 210 may be oriented at a non-zero angle to the longitudinal axis of the fixed upright structure 202. For example, as shown in Fig. 2, the first structural element 210 may be oriented at a perpendicular (or nearly perpendicular) angle to the longitudinal axis of the fixed upright structure 202.

The first set of one or more perception sensors 214 may be configured to determine a height parameter associated with a target machine, such as when the target machine is within the proximity zone 218 of the fixed upright structure 202, as further described herein. Accordingly, the first set of one or more perception sensors 214 may include a sonar sensor, a camera, a LIDAR sensor, and/or a RADAR sensor, or another type of sensor to perceive the height parameter associated with the target machine. Accordingly, the first set of one or more perception sensors 214 may be connected to the fixed upright structure 202, such as via the first structural element 210. For example, the first set of one or more perception sensors 214 may be mounted to the first structural element 210 and may be pointed at the proximity zone 218. In this way, the first set of one or more perception sensors 214 (e.g., when mounted to the first structural element 210) may be positioned above the target machine when the target machine is within the proximity zone 218, which increases an accuracy of the height parameter determined by the first set of one or more perception sensors 214.

The second structural element 212 may be connected to the fixed upright structure 202 and may be positioned on a side of the fixed upright structure 202 that is associated with the proximity zone 218 (e.g., a side that faces the proximity zone 218). The second structural element 212 may have an orientation that is aligned with (e.g., is parallel to, or nearly parallel to) the longitudinal axis of the fixed upright structure 202. For example, as shown in Fig. 2, the second structural element 212 may be oriented at a parallel (or nearly parallel) angle to the longitudinal axis of the fixed upright structure 202.

The second set of one or more perception sensors 216 may be configured to determine an offset distance parameter associated with a side of a target machine, such as when the target machine is within the proximity zone 218 of the fixed upright structure 202, as further described herein. The offset distance parameter may indicate, for example, a lateral distance from a side of the fixed upright structure 202 (e.g., from a side of the fixed upright structure 202 that faces the proximity zone 218; or from a side of the fixed upright structure 202 that is opposite of the side that faces the proximity zone 218, such as side on which the identification element 204 may be mounted) to the side of the target machine. Accordingly, the second set of one or more perception sensors 216 may include a sonar sensor, a camera, a LIDAR sensor, and/or a RADAR sensor, or another type of sensor to perceive the offset distance parameter associated with the side of a target machine.

The second set of one or more perception sensors 216 may be connected to the fixed upright structure 202, such as via the second structural element 212. For example, the second set of one or more perception sensors 216 may be mounted to the second structural element 212 and may be pointed at the proximity zone 218. In this way, the second set of one or more perception sensors 216 (e.g., when mounted to the second structural element 212) may be positioned adjacent to the target machine when the target machine is within the proximity zone 218, which increases an accuracy of the offset distance parameter determined by the second set of one or more perception sensors 216.

As further shown in Fig. 2, each perception sensor 214, of the first set of one or more perception sensors 214, may have a field of view 220. As described above, the first set of one or more perception sensors 214 may be pointed at the proximity zone 218. That is, the respective fields of view 220 may be at least partially coextensive with the proximity zone 218. Additionally, each perception sensor 216, of the second set of one or more perception sensors 216, may have a field of view 222. As described above, the second set of one or more perception sensors 216 may be pointed at the proximity zone 218. That is, the respective fields of view 222 may be at least partially coextensive with the proximity zone 218.

In some implementations, the proximity zone 218 may be defined, at least partially, as a minimum lateral distance from the side of the fixed upright structure 202 (e.g., the side of the fixed upright structure 202 on which the second set of one or more perception sensors 216 are mounted, such as via the second structural element 212) to a maximum lateral distance from the side of the fixed upright structure 202. For example, the minimum lateral distance may be associated with a minimum effective range characteristic of the second set of one or more perception sensors 216, and the maximum lateral distance may associated with a maximum effective range characteristic of the second set of one or more perception sensors 216. That is, the perception zone 218 may be a zone in which the second set of one or more perception sensors 216 can accurately determine an offset distance parameter associated with a side of a target machine when the target machine is within the zone. In some implementations, the minimum lateral distance may, alternatively, be associated with a spatial resolution characteristic of a perception sensor system of a mobile machine (e.g., that is to attempt to detect the fixed upright structure 202 and/or the identification element 204). That is, the minimum lateral distance may cause a boundary of the perception zone 218 to be sufficiently far away from the fixed upright structure 202 and/or the identification element 204 such that the perception sensor system of the mobile machine can easily, or more easily, detect the fixed upright structure 202 and/or the identification element 204, even when a target machine is adjacent to the fixed upright structure 202 (e.g., and within the proximity zone 218).

The proximity zone 218 may also be defined, at least partially, as a minimum longitudinal distance from the second set of one or more perception sensors 216 to a maximum longitudinal distance from the second set of one or more perception sensors 216. For example, the minimum longitudinal distance may be associated with a minimum effective range characteristic of the first set of one or more perception sensors 214, and the maximum longitudinal distance may associated with a maximum effective range characteristic of the first set of one or more perception sensors 214. That is, the perception zone 218 may be a zone in which the first set of one or more perception sensors 214 can accurately determine a height parameter associated with a target machine when the target machine is within the zone.

As indicated above, Fig. 2 is provided as an example. Other examples may differ from what is described in connection with Fig. 2.

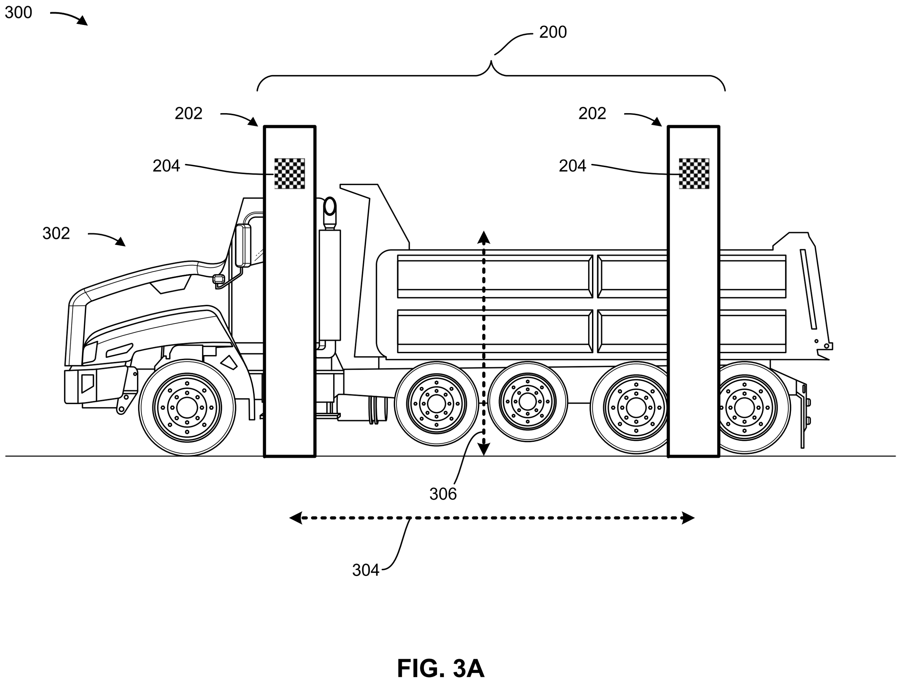

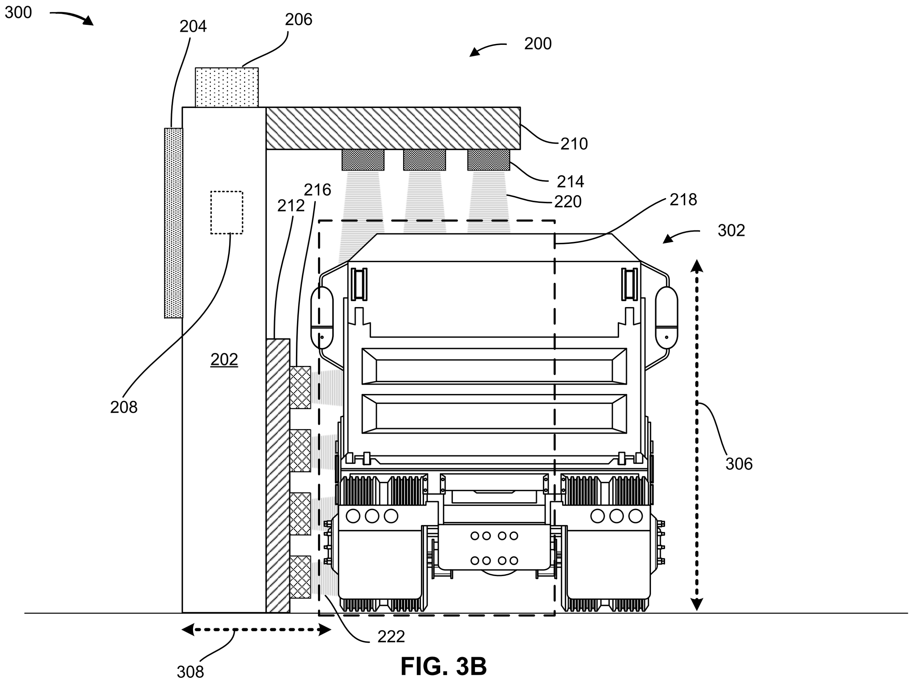

Figs. 3A-3B are diagrams of an example implementation 300 described herein. Fig. 3A shows a side view of the target machine locator system 200 (e.g., that comprises two upright structures 202) when a target machine 302 is adjacent to the upright structures 202 of the target machine locator system 200 and within respective proximity zones 218 of the upright structures 202. Fig. 3B shows a rear view of the target machine locator system 200 when the target machine 302 is adjacent to an upright structure 202 (e.g. a "rear" upright structure 202 of the upright structures 202) and within the proximity zone 218 of the upright structure 202.

As shown in Figs. 3A-3B, each fixed upright structure 202 may have an identification element 204 that is mounted on a side of the fixed upright structure 202 that is opposite of (or at least not the same as) a side of the fixed upright structure 202 that faces the proximity zone 218. In this way, the identification elements 204 are oriented in manner such that a mobile machine, using a perception sensors system, may detect the identification elements 204 (e.g., when an area of travel of the mobile machine faces respective sides of the fixed upright structures that include the identification elements 204) and thereby accurately measure a distance from the mobile machine to the target machine locator system 200.

The target machine 302 may have a height 304, which may be associated with a particular physical feature of the target machine 302. For example, when the target machine 302 is a dump truck, as shown in Figs. 3A-3B, the height 304 may be a height of a dump body of the target machine 302. Accordingly, the height 304 may also be referred to as dump height 304, or another type of height associated with the target machine 302.

Accordingly, the first set of one or more perception sensors 214 may determine a height parameter associated with the target machine 302 when the target machine 302 is within the proximity zone 218 of the fixed upright structure 202. For example, by being within the proximity zone 218, the target machine 302 may be within the respective fields of view 220 of the first set of one or more perception sensors 214, which enables the first set of one or more perception sensors 214 to determine the height parameter. The height parameter may indicate the height 304.

As shown in Fig. 3B, the target machine 302 may be adjacent to an upright structure 202 and within the proximity zone 218 of the upright structure 202. Accordingly, a lateral distance 306 may extend from a side of the fixed upright structure 202 (e.g., from a side of the fixed upright structure 202 that faces the proximity zone 218; or from a side of the fixed upright structure 202 that is opposite of the side that faces the proximity zone 218, such as side on which the identification element 204 may be mounted) to the side of the target machine 302. For example, as shown in Fig. 3B, the lateral distance 306 is from a side of the fixed upright structure 202 that does not face the proximity zone 218 to a side of the target machine 302.

Accordingly, the second set of one or more perception sensors 216 may determine an offset distance parameter associated with the target machine 302 when the target machine 302 is within the proximity zone 218 of the fixed upright structure 202. For example, by being within the proximity zone 218, the target machine 302 may be within the respective fields of view 222 of the second set of one or more perception sensors 216, which enables the second set of one or more perception sensors 216 to determine the offset distance parameter. The offset distance parameter may indicate the lateral distance 306.

As indicated above, Figs. 3A-3B are provided as an example. Other examples may differ from what is described in connection with Figs. 3A-3B.

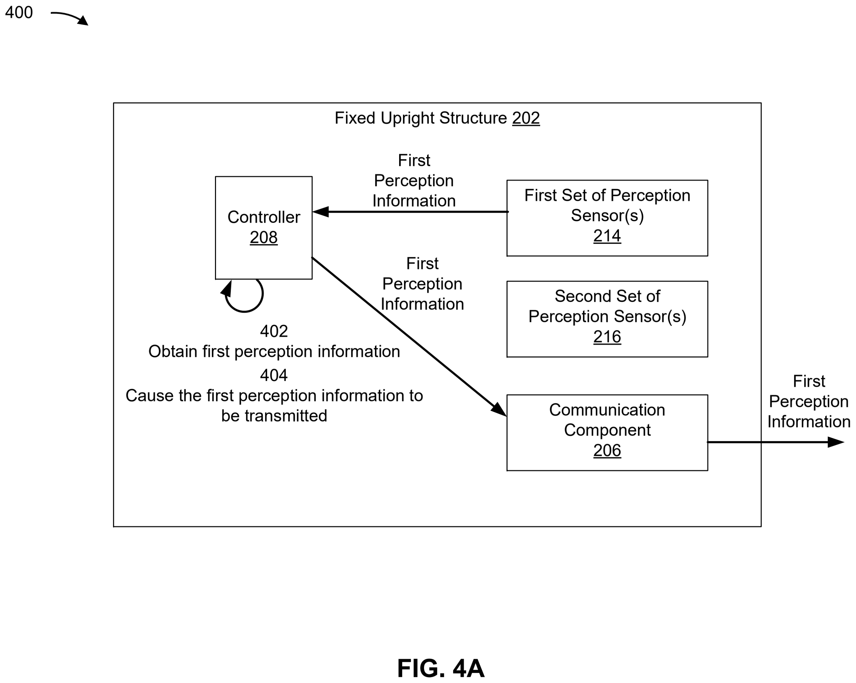

Figs. 4A-4B are diagrams of an example implementation 400 associated with a controller of a fixed upright structure of a target machine locator system.

As shown in Fig. 4A, and by reference number 402, a controller 208 of a fixed upright structure 202 may obtain first perception information. The first perception information may indicate a height parameter associated with a target machine (e.g., a target machine 302). For example, the controller 208 may obtain the first perception information from the first set of one or more perception sensors 214. That is, each perception sensor 214, of the first set of one or more perception sensors 214, may send first perception data that is captured by the perception sensor 214 (e.g., when the target machine is within a proximity zone 218 of the fixed upright structure 202) to the controller 208 (e.g., in real time, or near real time), and therefore the controller 208 may collectively receive respective first perception data captured by the first set of one or more perception sensors 214 as first perception information.

In some implementations, the controller 208 may obtain the first perception information from a device included in or associated with the target machine. The device may be, for example, a radio transponder device; a user device (e.g., that runs an application), such as of an operator of the target machine; a worksite management system (e.g., that identifies target machines, such as via optical recognition, radio recognition, or another type of recognition, at a worksite associated with the fixed upright structure 202); or another type of device. For example, the device may wirelessly transmit (e.g., directly, or indirectly, such as via a cellular network) the first perception information to a communication component 206 of the fixed upright structure 202, and the controller 208 may obtain the first perception information from the communication component 206. In this way, the controller 208 may obtain first perception information that indicates a height parameter associated with the target machine even when the first set of one or more perception sensors 214 are not operating or are not included in the fixed upright structure 202.

As shown by reference number 404, the controller 208 may cause the first perception information to be transmitted. The controller 208 may cause the communication component 206 transmit (e.g., wirelessly transmit) the first perception information, such as to a mobile machine. For example, the communication component 206 may wirelessly transmit the first perception information to a communication component 130 of the machine 100.

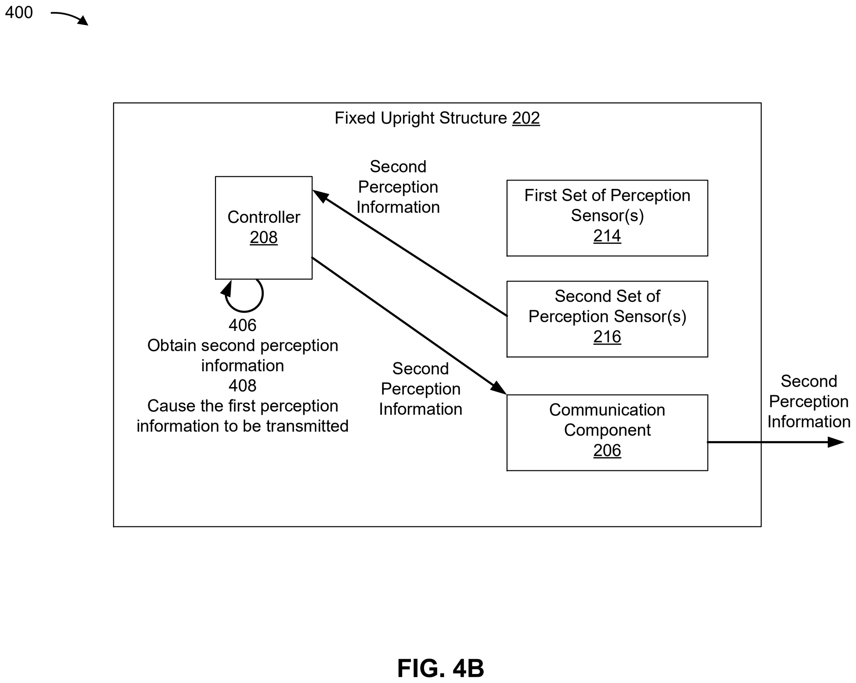

As shown in Fig. 4B, and by reference number 406, the controller 208 of the fixed upright structure 202 may obtain second perception information. The second perception information may indicate an offset distance parameter associated with the target machine (e.g., the target machine 302). For example, the controller 208 may obtain the second perception information from the second set of one or more perception sensors 216. That is, each perception sensor 216, of the second set of one or more perception sensors 216, may send second perception data that is captured by the perception sensor 216 (e.g., when the target machine is within the proximity zone 218 of the fixed upright structure 202) to the controller 208 (e.g., in real time, or near real time), and therefore the controller 208 may collectively receive respective second perception data captured by the second set of one or more perception sensors 216 as second perception information.

As shown by reference number 408, the controller 208 may cause the second perception information to be transmitted. The controller 208 may cause the communication component 206 of the fixed upright structure 202 to transmit (e.g., wirelessly transmit) the second perception information, such as to the mobile machine. For example, the communication component 206 may wirelessly transmit the second perception information to the communication component 130 of the machine 100.

In this way, as shown in Figs. 4A-4B, the controller 208 may obtain perception information indicating a measurement parameter (e.g., a height parameter or an offset distance parameter) associated with a target machine (e.g., the target machine 302). Accordingly, the controller 208 may cause the perception information to be transmitted to a mobile machine (e.g., the machine 100), such as by causing the communication component 206 to transmit the perception information to the mobile machine.

This may enable the mobile machine to determine at least one of a distance from the mobile machine to the target machine (or at least to the fixed upright structure 202 or to a target machine locator system 200 that includes the fixed upright structure 202) or a height of the mobile machine (e.g., a height 304 of the target machine). To determine the distance from the mobile machine to the target machine (e.g., to a side of the target machine), the mobile machine (e.g., using a perception sensor system of the mobile machine, such as the perception sensor system 112 of the machine 100) may determine a distance from the mobile machine to the fixed upright structure 202 (e.g., to a side of the fixed upright structure associated with the identification element 204) and then may identify the lateral offset distance from the fixed upright structure 202 (e.g., the side of the fixed upright structure 202) to the side of the target machine that is indicated by the offset distance parameter. The mobile machine (e.g., using the controller 114) then may determine the distance from the mobile machine to the target machine by summing the distance from the mobile machine to the fixed upright structure 202 and the lateral offset distance from the fixed upright structure 202 to the side of the target machine.

In some implementations, the fixed upright structure 202 may include another set of one or more perception sensors (e.g., a third set of one or more perception sensors) that are configured to determine a distance from a side of the fixed upright structure 202 (e.g., the side of the fixed upright structure 202 that is associated with the offset distance parameter) to a mobile machine. Accordingly, the other set of one or more perception sensors may include a sonar sensor, a camera, a LIDAR sensor, and/or a RADAR sensor, or another type of sensor to perceive the distance from the side of the fixed upright structure 202 to the mobile machine. Accordingly, the controller 208 may obtain, from the other set of one or more perception sensors, other perception information that indicates the distance from the fixed upright structure 202 (e.g., from the side of the fixed upright structure 202) to the mobile machine, and may thereby determine, additionally based on the offset distance parameter that indicates a lateral distance from the side of the fixed upright structure 202 to the side of the target machine, a distance from the mobile machine to the side of the target machine. The controller then may cause distance information indicating the distance from the mobile machine to the side of the target machine to be transmitted to the mobile machine, such by causing the communication component 206 to transmit the distance information to the mobile machine. In this way, the mobile machine does not need to include a perception sensor system (e.g., the perception sensor system 112) to be able to determine the distance from the mobile machine to the side of the target machine.

As indicated above, Figs. 4A-4B are provided as an example. Other examples may differ from what is described in connection with Figs. 4A-4B.

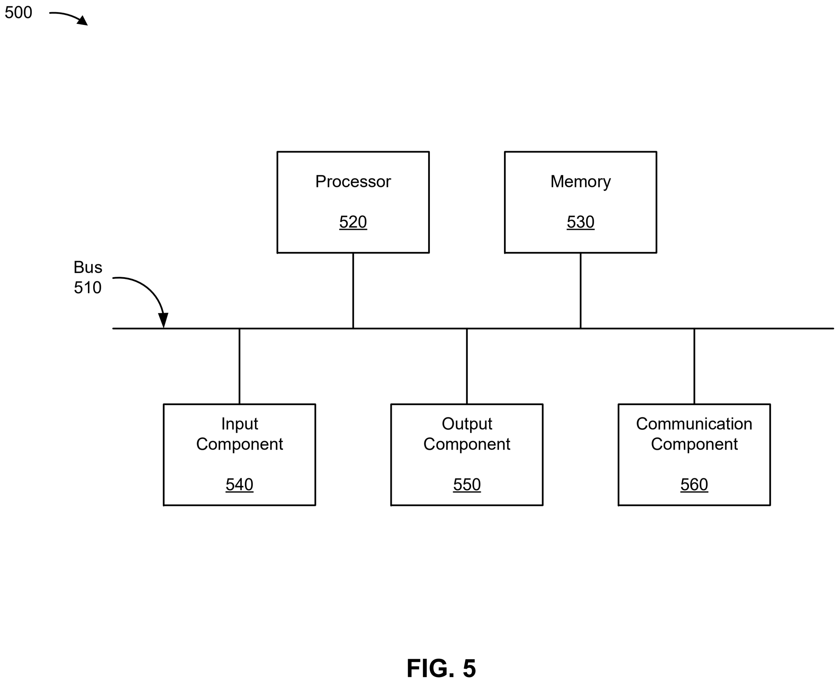

Fig. 5 is a diagram of example components of a device 500 associated with a target machine locator system. The device 500 may correspond to the perception sensor system 112, the controller 114, the plurality of perception sensors 126, the target machine locator system 200, the one or more fixed upright structures 202, identification element 204, the communication component 206, the controller 208, the first set of one or more perception sensors 214, and/or the second set of one or more perception sensors 216. The perception sensor system 112, the controller 114, the plurality of perception sensors 126, the target machine locator system 200, the one or more fixed upright structures 202, identification element 204, the communication component 206, the controller 208, the first set of one or more perception sensors 214, and/or the second set of one or more perception sensors 216 may include one or more devices 500 and/or one or more components of the device 500. As shown in Fig. 5, the device 500 may include a bus 510, a processor 520, a memory 530, an input component 540, an output component 550, and/or a communication component 560.

The bus 510 may include one or more components that enable wired and/or wireless communication among the components of the device 500. The bus 510 may couple together two or more components of Fig. 5, such as via operative coupling, communicative coupling, electronic coupling, and/or electric coupling. For example, the bus 510 may include an electrical connection (e.g., a wire, a trace, and/or a lead) and/or a wireless bus. The processor 520 may include a central processing unit, a graphics processing unit, a microprocessor, a controller, a microcontroller, a digital signal processor, a field-programmable gate array, an application-specific integrated circuit, and/or another type of processing component. The processor 520 may be implemented in hardware, firmware, or a combination of hardware and software. The processor 520 may include one or more processors capable of being programmed to perform one or more operations or processes described elsewhere herein.

The memory 530 may include volatile and/or nonvolatile memory. For example, the memory 530 may include random access memory (RAM), read only memory (ROM), a hard disk drive, and/or another type of memory (e.g., a flash memory, a magnetic memory, and/or an optical memory). The memory 530 may include internal memory (e.g., RAM, ROM, or a hard disk drive) and/or removable memory (e.g., removable via a universal serial bus connection). The memory 530 may be a non-transitory computer-readable medium. The memory 530 may store information, one or more instructions, and/or software (e.g., one or more software applications) related to the operation of the device 500. The memory 530 may include one or more memories that are coupled (e.g., communicatively coupled) to one or more processors (e.g., processor 520), such as via the bus 510. Communicative coupling between a processor 520 and a memory 530 may enable the processor 520 to read and/or process information stored in the memory 530 and/or to store information in the memory 530.

The input component 540 may enable the device 500 to receive input, such as user input and/or sensed input. For example, the input component 540 may include a touch screen, a keyboard, a keypad, a mouse, a button, a microphone, a switch, a sensor, a global positioning system sensor, a global navigation satellite system sensor, an accelerometer, a gyroscope, and/or an actuator. The output component 550 may enable the device 500 to provide output, such as via a display, a speaker, and/or a light-emitting diode. The communication component 560 may enable the device 500 to communicate with other devices via a wired connection and/or a wireless connection. For example, the communication component 560 may include a receiver, a transmitter, a transceiver, a modem, a network interface card, and/or an antenna.

The device 500 may perform one or more operations or processes described herein. For example, a non-transitory computer-readable medium (e.g., memory 530) may store a set of instructions (e.g., one or more instructions or code) for execution by the processor 520. The processor 520 may execute the set of instructions to perform one or more operations or processes described herein. Execution of the set of instructions, by one or more processors 520, causes the one or more processors 520 and/or the device 500 to perform one or more operations or processes described herein. Hardwired circuitry may be used instead of or in combination with the instructions to perform one or more operations or processes described herein. Additionally, or alternatively, the processor 520 may be configured to perform one or more operations or processes described herein. Thus, implementations described herein are not limited to any specific combination of hardware circuitry and software.

The number and arrangement of components shown in Fig. 5 are provided as an example. The device 500 may include additional components, fewer components, different components, or differently arranged components than those shown in Fig. 5. A set of components (e.g., one or more components) of the device 500 may perform one or more functions described as being performed by another set of components of the device 500.

### Industrial Applicability

Implementations described herein may be used with any mobile machine and/or any target machine. For example, any mobile machine that utilizes an implement and linkage, such as a wheel loader that includes an implement and linkage to load, carry, and dump material (e.g., into the target machine), and any target machine that utilizes a dump body, such as dump truck that includes a dump body to receive dumped material from the mobile machine.

A mobile machine can include one or more perception sensors to detect a position of a target machine (e.g., a dump truck), such as to facilitate an automatic control operation (e.g., that controls a movement of the mobile machine or an operation of an implement and a linkage of the machine, such as in relation to the target machine). For example, the one or more perception sensors can capture and pass perception information that indicates a position of the target machine to a controller of the mobile machine, and the controller causes an automatic control operation to be performed with respect to the target when the machine travels sufficiently near the target machine.

However, in many cases, the one or more perception sensors are unable to accurately detect a position of a target machine. For example, the target machine may not include a fiducial, or a fiducial of the target machine may be at least partially obscured from a field of view of the one or more perception sensors of the mobile machine. The one or more perception sensors then do not capture perception data, or capture limited perception data, related to a position of the target machine. This can reduce a likelihood of a controller of the mobile machine accurately determining the position of the target machine. This can result in the mobile machine unintentionally contacting the target machine, such as due to a miscalculation of a stopping distance or of an implement position with respect to the target machine. This, in turn, causes damage (e.g., dents, cracks, or other types of structural deformations) to the implement and the linkage, the mobile machine, and the target machine, which impacts a performance of, as well as reduces an operable life of, the implement and the linkage, the mobile machine, and the target machine.

Some implementations described herein include a target machine locator system that includes one or more fixed upright structures. A fixed upright structure includes an identification element (e.g., a fiducial, a RADAR reflector, a sonar beacon, a retroreflective marker, or another type of identification element) that is detectable by a perception sensor system of a mobile machine, a communication component configured to communicate with the mobile machine, and a controller. The fixed upright structure includes also includes at least one of a first set of one or more perception sensors to determine a height parameter associated with a target machine (e.g., that indicates a dumping height of the target machine when the target machine is a dump truck) when the target machine is within a proximity zone of the fixed upright structure, or a second set of one or more perception sensors to determine an offset distance parameter associated with a side of the target machine (e.g., that indicates a lateral offset distance from a side of the fixed upright structure to the side of the target machine) when the target machine is within the proximity zone.

The controller is configured to obtain perception information from the first set of one or more perception sensors and/or the second set of one or more perception sensors, where the perception information indicates a measurement parameter (e.g., the height parameter and/or the offset distance parameter) associated with the target machine. Accordingly, the controller 208 cause the perception information to be transmitted to the mobile machine, such as by causing the communication component to transmit the perception information to the mobile machine. This enables the mobile machine to determine (e.g., using a perception sensor system of the mobile machine) at least one of a distance from the mobile machine to the target machine (e.g., by summing a distance to the fixed upright structure, which is determined based on detecting the identification element on a side of the fixed upright structure, and the lateral offset distance from the side of the fixed upright structure to the side of the target machine, which is indicated by the offset distance parameter) or a height of the mobile machine (e.g., that is indicated by the height parameter).

In this way, the target machine locator system facilitates an accurate determination of distance, by the mobile machine, from the mobile machine to the target machine (e.g., relative to at least one fixed upright structure of the target machine locator system). This therefore reduces a likelihood of an improper approach and interaction of the mobile machine with the target machine, regardless of whether the target machine includes an identification element. Further, a likelihood of the mobile machine unintentionally contacting the target machine, such as due to a miscalculation of a stopping distance or of an implement and linkage position with respect to the target machine, is reduced. Accordingly, in many cases, damage (e.g., dents, cracks, or other types of structural deformations) to the implement and the linkage, the machine, and the target machine is prevented, which improves a performance of, as well as increases an operable life of, the implement and the linkage, the machine, and the target machine.

## Claims

1. A target machine locator system (200), comprising:
one or more fixed upright structures (202), wherein each fixed upright structure (202) includes:
an identification element (204) that is detectable by a perception sensor system (112) of a mobile machine (100);
a communication component (206) configured to communicate with the mobile machine (100);
a controller (208); and
a first set of one or more perception sensors (214) to determine a height (304) parameter associated with a target machine (302) when the target machine (302) is within a proximity zone (218) of the fixed upright structure (202); and
a second set of one or more perception sensors (216) to determine an offset distance parameter associated with a side of the target machine (302) when the target machine (302) is within the proximity zone (218).

2. The target machine locator system (200) of claim 1, wherein the controller (208) is configured to:
obtain, from the first set of one or more perception sensors (214), first perception information indicating the height (304) parameter associated with the target machine (302); and
cause the communication component (206) to transmit the first perception information to the mobile machine (100).

3. The target machine locator system (200) of any of claims 1-2, wherein the controller (208) is configured to:
obtain, from the second set of one or more perception sensors (216), second perception information indicating the offset distance parameter associated with the side of the target machine (302); and
cause the communication component (206) to transmit the second perception information to the mobile machine (100).

4. The target machine locator system (200) of any of claims 1-3, wherein the offset distance parameter indicates a lateral distance (306) from a side of the fixed upright structure (202) to the side of the target machine (302).

5. The target machine locator system (200) of any of claims 1-4, wherein the proximity zone (218) is defined by a minimum lateral distance (306) from a side of the fixed upright structure (202) to a maximum lateral distance (306) from the side of the fixed upright structure (202),
wherein the minimum lateral distance (306) is associated with a spatial resolution characteristic of the perception sensor system (112) of the mobile machine (100), and
wherein the maximum lateral distance (306) is associated with a maximum effective range characteristic of the second set of one or more perception sensors (216).

6. The target machine locator system (200) of any of claims 1-5,
wherein the first set of one or more perception sensors (214) are mounted to a first structural element (210) of the fixed upright structure (202) and pointed at the proximity zone (218), and
wherein the second set of one or more perception sensors (216) are mounted to a second structural element (212) of the fixed upright structure (202) and pointed at the proximity zone (218).

7. A fixed upright structure (202) of a target machine locator system (200), comprising:
an identification element (204);
a controller (208); and
at least one of:
a first set of one or more perception sensors (214) to determine a height (304) parameter associated with a target machine (302) when the target machine (302) is within a proximity zone (218) of the fixed upright structure (202); or
a second set of one or more perception sensors (216) to determine an offset distance parameter associated with a side of the target machine (302) when the target machine (302) is within the proximity zone (218).

8. The fixed upright structure (202) of claim 7, wherein the controller (208) is configured to:
obtain, from the first set of one or more perception sensors (214), first perception information indicating the height (304) parameter associated with the target machine (302); and
cause the first perception information to be transmitted to a mobile machine (100).

9. The fixed upright structure (202) of any of claims 7-8, wherein the controller (208) is configured to:
obtain, from the second set of one or more perception sensors (216), second perception information indicating the offset distance parameter associated with the side of the target machine (302); and
cause the second perception information to be transmitted to a mobile machine (100).

10. The fixed upright structure (202) of any of claims 7-9, wherein the controller (208) is configured to:
obtain other perception information that indicates a distance from the fixed upright structure (202) to the mobile machine (100);
determine, based on the distance from the fixed upright structure (202) to the mobile machine (100) and the offset distance parameter, a distance from the mobile machine (100) to the side of the target machine (302); and
cause distance information indicating the distance from the mobile machine (100) to the side of the target machine (302) to be transmitted to the mobile machine (100).
